Europäisches Patentamt

European Patent Office

Office européen des brevets

(11) Publication number: **0 298 992**
**B1**

# EUROPEAN PATENT SPECIFICATION

(45) Date of publication of patent specification: **03.10.90**

(51) Int. Cl.⁵: **B 23 K 26/06**

(21) Application number: **87902942.9**

(22) Date of filing: **23.03.87**

(86) International application number:
**PCT/US87/00642**

(87) International publication number:
**WO 87/05842 08.10.87 Gazette 87/22**

(54) **LASER BEAM TRANSPORT APPARATUS.**

(30) Priority: **26.03.86 US 844422**

(43) Date of publication of application:
**18.01.89 Bulletin 89/03**

(45) Publication of the grant of the patent:
**03.10.90 Bulletin 90/40**

(84) Designated Contracting States:
**BE CH DE FR GB IT LI SE**

(56) References cited:
**EP-A-0 102 732**
**GB-A-2 160 674**

(73) Proprietor: **WESTINGHOUSE ELECTRIC CORPORATION**
**Westinghouse Building Gateway Center**
**Pittsburgh Pennsylvania 15222 (US)**

(72) Inventor: **KASNER, William, H.**
**11686 Althea Drive**
**Pittsburgh, PA 15235 (US)**
Inventor: **COOPER, Martin, H.**
**1904 Hampstead Drive**
**Pittsburgh, PA 15235 (US)**
Inventor: **SWENSON, Clark, E.**
**15 Birch Run**
**Orchard Park, NY 14127 (US)**
Inventor: **CIEZ, Albert, P.**
**631 Deauville Drive**
**Monroeville, PA 15146 (US)**
Inventor: **ANDREWS, Katherine, M.**
**5533 Fifth Avenue, No. 10**
**Pittsburgh, PA 15232 (US)**

(74) Representative: **Fleuchaus, Leo, Dipl.-Ing. et al**
**Melchiorstrasse 42**
**D-8000 München 71 (DE)**

**Description**

Welding processes using lasers, such as high power continuous wave (CW) $CO_2$ lasers, for example, require nearly constant energy deposition at the weld to produce acceptable welds. With robotic or automated laser welding systems which are required to function over a wide travel range such as an extended length weld on a large workpiece, divergence of the laser beam as it travels from the laser generator in one location to the workpiece at a relatively remote location, will result in changes in the focal spot diameter at the weld. This effect results from the larger, diverged beam diameter at the focusing optics which have a fixed focal length. The f number, which is defined as the focal length of the focusing optics divided by the beam diameter, decreases as the beam diameter increases, thereby changing the focusing of the beam. Since the power density is a function of the square of the focal spot diameter, the welding parameters are very sensitive to the beam diameter.

Laser beams produced by commercially available, high power (12 to 25 kW) continuous wave $CO_2$ lasers, for example, are about 2 to 3 inches (0.051 to 0.076 m) in nominal diameter. These size beams are subject to enlarging significantly in diameter in accordance with their transport over large distances from the laser generator to the welding station.

Patent Publication GB—A—2160674 discloses a laser welding system comprising a laser beam generator and a laser beam expander, the laser beam being disposed in axially expandable tubes and aligned with the focusing lens to facilitate changing the welding location. However, the focusing lens is relatively near to the welding and a change in welding location may also require refocusing since a highly compressed laser beam has the tendency to expand even over relatively short travel distances. For welding operations which require welding along a relatively long seam, frequent refocusing would be required for the laser welding equipment traveling along such seam, and the laser power or welding speed would have to be adjusted as the laser beam's intensity decreases with distance from the laser generator.

European patent publication EP—A2—102 732 describes an apparatus for the laser treatment of electrical steel which includes a beam generator providing a laser beam which is expanded for transmission to a polygonal rotating flat mirror structure which directs the beam through a flat-field scanning lens which focusses the expanded beam directly onto a moving steel strip R beneath.

In this arrangement, the distances between beam generator, beam expander, rotating mirror, scanning lens and steel strip are fixed; it is the steel strip that is moving at a given speed. No consideration is given to the possibility of moving the scanning lens and the rotating mirror structure relative to the beam generator and of course no provisions are made therefor.

It is therefore the principal object of the present invention to provide a laser beam welding apparatus which is affected by large changes in distances between the laser generator and the welding station to only a relatively small degree to facilitate welding operations and improve the quality of weldments of substantial length.

With this object in view, the present invention resides in a welding apparatus as defined in claim 1.

The invention will become more readily apparent from the following description of a preferred embodiment thereof shown by way of example only, in the accompanying drawings, wherein:

Figure 1 is a somewhat diagrammatic isometric view of a system according to the invention; and

Figure 2 is a graph illustrating the beam divergent characteristics of two different beams over transport distance up to 150 feet (46 m).

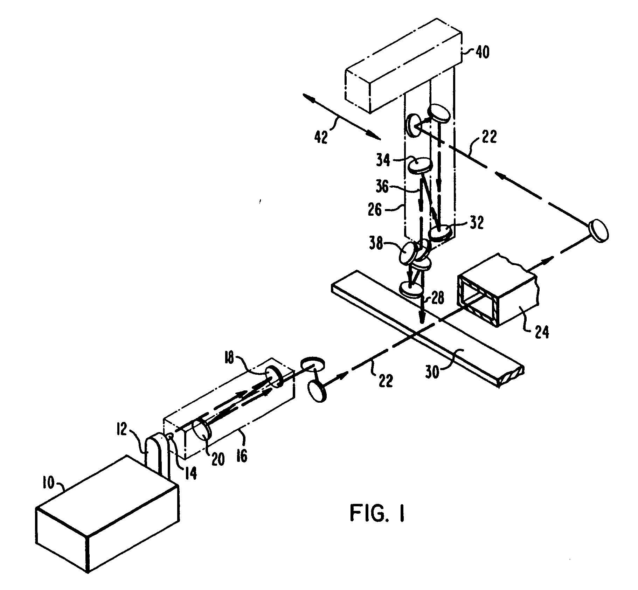

In Figure 1 a laser generator 10 which, by way of exmaple only, may be a high power continuous wave $CO_2$ laser, outputs from the beam director 12 a laser beam 14 of relatively small diameter, such as 2 to $3\frac{1}{2}$ inches (0.05 to 0.09 m) received by the beam expander 16 located relatively closely adjacent the generator 10.

The beam expander 16 is provided with mirror optics 18 and 20 selected to increase the beam diameter to a size and a range of about 5 to 7 inches (0.13 to 0.18 m).

The expanded beam 22 is then directed by various other mirror optics and usually through an enclosed duct 24 over the transport distance and to a beam reducer 26 located closely adjacent the welding station 28 located above the schematically illustrated workpiece 30. The beam reducer 26 includes mirror optics 32 and 34 which reduce the diameter of the beam to the size selected for welding purposes. The reduced size beam 36 permits the use of smaller mirrors such as at 38 in the workhead at the station thereby resulting in a smaller overall workhead size. The beam reducer 26 and the workhead are supported from the schematically shown gantry crane beam 40 which is adapted to travel back and forth in the direction indicated by the arrows 42.

It is to be appreciated that the welding station may have to travel linearly 50 or more feet (15 or more m) if the workpiece is a large vessel or other large object requiring a weld for such distances.

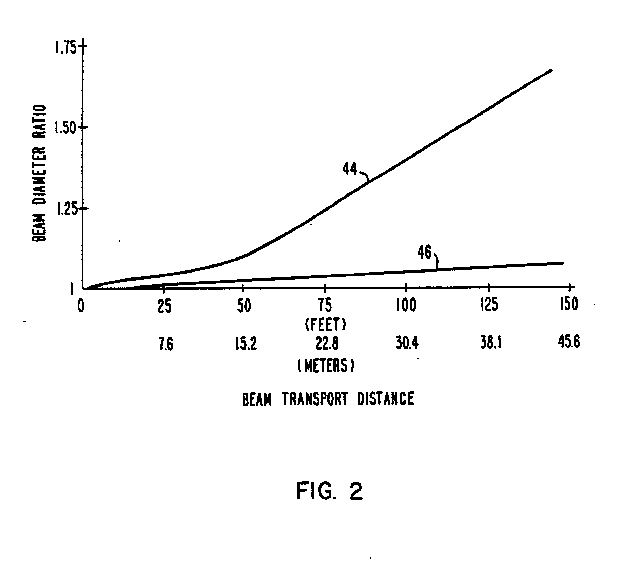

Figure 2 is intended to make the advantages of the invention apparent. The ordinate of the graph is the ratio of the diverged beam diameter to the original diameter of the beam while the abscissa represents the beam transport distance. Line 44 represents a 3.5 inch (0.09 m) beam while line 46 represents a 6 inch (0.15 m) beam. As may readily be seen, the beam of line 44 has diverged about 25% in a distance of 75 feet (23 m) while the line 46 beam has divered well under 10% in transport distance of a 150 feet (46 m). The actual measured change in beam diameter of the 6 inch (0.15 m) beam over a range of the working travel of 75 to 150 feet (23 to 46 m) were in the order of 3 to 5%, which is well within the constancy required for adequately uniform welds.

The arrangement according to the invention avoids requirements, in the absence of the invention, of either providing a welding control system which would have to be programmed to compensate for the variation in focal spot size by adjusting either the laser power or the speed of travel of the welding head or both.

## Claim

A laser beam welding apparatus for laser welding at a welding station (28) adapted to form a weldment of a predetermined length, comprising a laser generator (10) disposed at one location remote from said welding stations (28) and adapted to produce a small diameter laser beam of a size in the range of 0.05 to 0.1 m diameter which is subject to diverging to about 25% in a transport distance of about 23 meters, a beam expander (16) disposed adjacent said one location adapted to expand said beam to a diameter in the range of 0.13 to 0.18 m at which a laser beam is subject to diverging generally by less than 10% in a transport distance of 23 to 46 meters, optical means for directing the expanded beam (22) to a second location adjacent said welding station (28), and a beam reducer (26) associated with said welding station (28) and disposed in the path of said expanded beam, said welding station (28) together with said beam reducer (26) being movable linearly along said weldment to be formed such that said beam reducer (26) is capable of receiving and reducing said beam (2) for laser welding at a continuously varying distance from said beam expander (16), said welding station (28) also including a workhead having mirrors 38 for directing said reduced diameter beam to said weldment.

## Patentanspruch

Laserstrahl-Schweißgerät zum Laserschweißen an einer Schweißstation (28) die so eingerichtet ist, daß sie eine Schweißnaht vorgegebener Länge erzeugt, enthaltend einen Lasergenerator (10), der im Abstand zu diese Schweißstation (28) eingerichtet ist und so ausgelegt ist, daß er einen Laserstrahl mit kleinem Durchmesser in der Größenordnung von 0,05—0,01 m Durchmesser erzeugt, wobei dieser in einem Übertragungsabstand von etwa 23 m auf etwa 25% divergiert, und ein Strahlverbreiterer (16) anschließend an diesen Ort eingerichtet ist, um den Strahl auf einem Durchmesser in der Größenordnung von 0,13—0,18 m zu verbreitern, während ein Laserstrahl sich in einem Übertragungsabstand von 23 bis 46 Meter im allgemeinen auf weniger als 10% verbreitert optische Mittel zum Lenken des verbeiterten Strahls (22) auf eine zweite Station anschließend an die genannte Schweißstation (28) vorhanden sind, und ein Strahlreduzierer (26) im Zusammenhang mit dieser Schweißstation (28) eingerichtet ist und im Pfad des verbreiterten Strahls angeordnet ist, wobei diese Schweißstation (28) zusammen mit dem Strahlreduzierer (26) entland der auszugildenden Schweißnaht linear beweglich ist, so daß der Strahlreduzierer (26) den Strahl (22) zwecks Laserschweißung in einem kontinuierlich veränderbaren Abstand von Strahlverbreiterer (16) aufnahmen und reduzieren kann, wobei diese Schweißstation (28) auch einem Arbeitskopf mit Spiegeln (38) einschließt, um den Strahl mit den reduzierten Durchmesser auf die Schweißnaht zu richten.

## Revendication

Appareil de soudage par faisceau laser pour souder au laser dans un poste de soudage (28) adapté pour former une soudure d'une longeur prédéterminée, comportant un générateur laser (10) disposé en un emplacement éloigné desdits postes de soudage (28) et adapté pour produire un faisceau laser de petit diamètre d'une taille située dans la plage comprise entre des diamètres de 0,05 et 0,1 m, qui soit soumis à une divergence d'environ 25% sur une distance de transport d'environ 23 m, un dispositif d'expansion de faisceau (16) disposé au voisinage dudit premier emplacement, et adapté pour dilater ledit faisceau à un diamètre compris dans le plage comprise entre 0,13 et 0,18 m, dans laquelle un faisceau laser est soumis à une divergence généralement inférieure à 10% dans une distance de transport comprise entre 23 et 46 m, des moyens optiques pour diriger le faisceau dilaté (22) vers un deuxième emplacement voisin dudit poste de soudage (28), et un dispositif de réduction de faisceau (26) associé audit poste de soudage (28) et disposé dans le chemin dudit faisceau dilaté, ledit poste de soudage (28), ainsi que ledit dispositif de réduction de faisceau (26) étant mobiles de façon linéaire de long de ladite soudure devant être formée de telle sorte que ledit dispositif de réduction de faisceau (26) soit capable de recevoir et de réduire ledit faisceau (22) pour un soudage au laser à une distance variant de façon continuelle depuis ledit dispositif d'expansion de faisceau (16) ledit poste de soudage (28) comportant également une tête de travail ayant des miroirs (38) pour diriger ledit faisceau de diamètre réduit sur ladite soudure.

FIG. I

FIG. 2